# EUROPEAN PATENT SPECIFICATION

(11) **EP 3 942 918 B1**
(45) Date of publication and mention of the grant of the patent: **18.06.2025**
(21) Application number: 21166999.9
(22) Date of filing: 06.04.2021
(51) Int. Cl.: A01D 41/14

(54) **HARVESTER HEADER**
ERNTEVORSATZ
TÊTE DE RÉCOLTE DE MOISSONNEUSE

(30) Priority: 24.07.2020 IT 202000017947
(43) Date of publication of application: 26.01.2022
(73) Proprietor: Dominoni S.r.L, 26010 Camisano (Cremona) (IT)
(72) Inventor: DOMINONI, Massimo, I-26010 Camisano (IT)
(74) Representative: Lunati & Mazzoni S.r.L.

(56) References cited:
- EP-B1- 2 732 689
- US-A- 3 574 990
- US-A- 4 724 661
- US-A1- 2004 065 069
- US-B2- 7 520 115

## Description

The present invention relates to an improved combine harvester head of the type specified in the preamble of the first claim.

In particular, the present invention relates to a harvester header for harvesting, for example, soybean, barley, triticale, rapeseed, broad beans and other thin-stemmed crops including a cutter bar, for example intended for cutting.

Similar headers are described within patent documents US-B-7520115 and US-A-2004/065069. A header according to the preamble of claim 1 is known from US3574990A.

As is known, agricultural harvesting machines consist, briefly, of a machine body equipped with movement means and a motor connected at the front to one or more harvesting heads.

These harvesting headers may vary according to the purposes for which they are intended.

For example, the harvesting heads for sunflowers or corn are arranged in the most advanced portion of the agricultural machine, generally a combine harvester, considering the direction and normal direction of rectilinear movement, and have conveyors capable of conveying the cut plants towards a central portion of header. As regards the collection of soybeans, as well as of other plants with thin stems, the machines are provided with at least one cutting device adapted to act along the direction of advance imposed by the handling means.

Therefore, these apparatuses preferably have a movable or, better said, floating cutter bar capable of crawling on the ground and cutting the soybean plants as close as possible to the ground in correspondence with the stem, allowing the harvesting of pods close to the ground.

These bars follow the movement of the harvesting machine and can also move according to the roughness of the ground and the force to which they are subjected. In particular, this movement consists in a substantial floating of the bars above the ground.

The flotation and efficiency of the cutting bars, or cutter bars, therefore depends on the stiffness of the structure characterizing the bars themselves.

Documents US-B-7805921 and EP-B-2732689 describe some particular measures adopted in order to allow the controlled float of the cutter bar.

Document US-B-7805921 describes a harvester header including a frame to which a cutter bar is constrained in a compliant way so that the cutter bar can rotate or float relative to the frame relative to the ground and in which rotation is controlled by a system of oleo-dynamic damping with actuator arranged substantially vertically operating by thrust.

The head just described includes some important drawbacks.

In particular, the damping mechanism is inefficient. The stresses are not discharged effectively and, moreover, the mechanism must be subject to continuous maintenance to ensure good performance.

Document EP-B-2732689 substantially describes a combine harvester header including a frame comprising supports on which it is rotatably constrained to a shaft to which support arms are constrained, the peculiarity of which is to define two axes of rotation, with respect to the supports, in such a way as to balance any roughness and relieve any stresses deriving from bending or torsion of the support arms.

In this regard, the constraint made by the support arms with respect to the supports is achieved with a triangular hinged mechanism, including at least one lifting piston, operating by pushing, and a sleeve in correspondence with which the rotation axes meet.

The head just described also includes some drawbacks.

In particular, the mechanism that allows the cutter bar to float is very complex. Therefore, such a solution cannot be cheap.

Furthermore, even in this case, maintenance is very important since the labilities of the components must be kept controlled in order to prevent the cutter bar from arriving to be broken.

In this situation, the technical task underlying the present invention is to devise an improved harvester header capable of substantially obviating at least part of the aforementioned drawbacks.

Within the scope of said technical task it is an important object of the invention to obtain an improved harvester header which allows the cutter bar to float efficiently. Another important object of the invention is to provide an improved combine header that is simple and economical.

A further aim of the invention is to provide an improved combine harvester head which allows rapid maintenance to be carried out.

The technical task and the specified aims are achieved by an improved harvester header as claimed in the annexed claim 1.

Preferred technical solutions are highlighted in the dependent claims.

The characteristics and advantages of the invention are clarified below by the detailed description of preferred embodiments of the invention, with reference to the accompanying figures, in which:

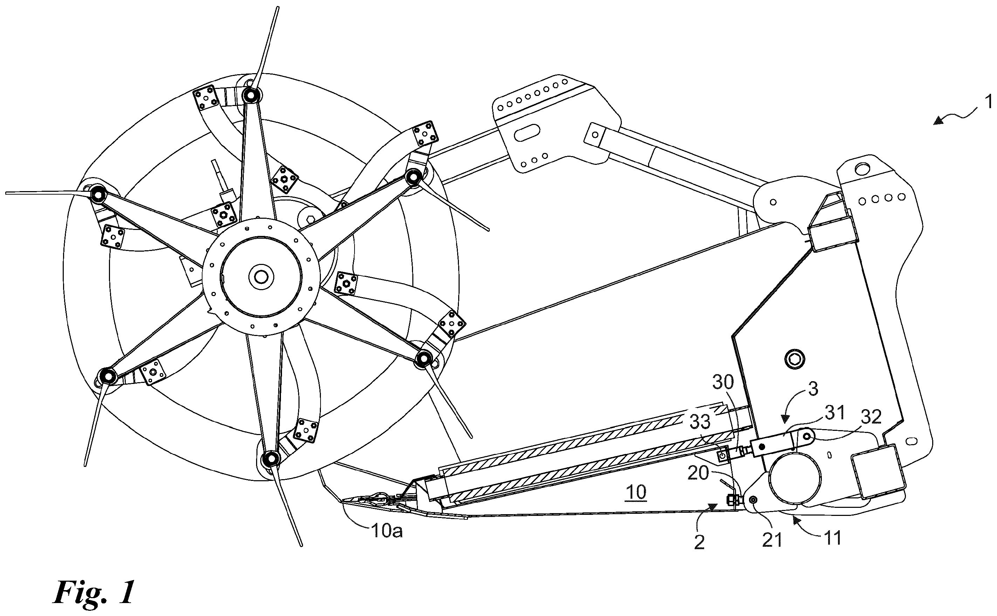

the **Fig. 1** shows a side view of an improved harvester header according to the invention in a first embodiment;

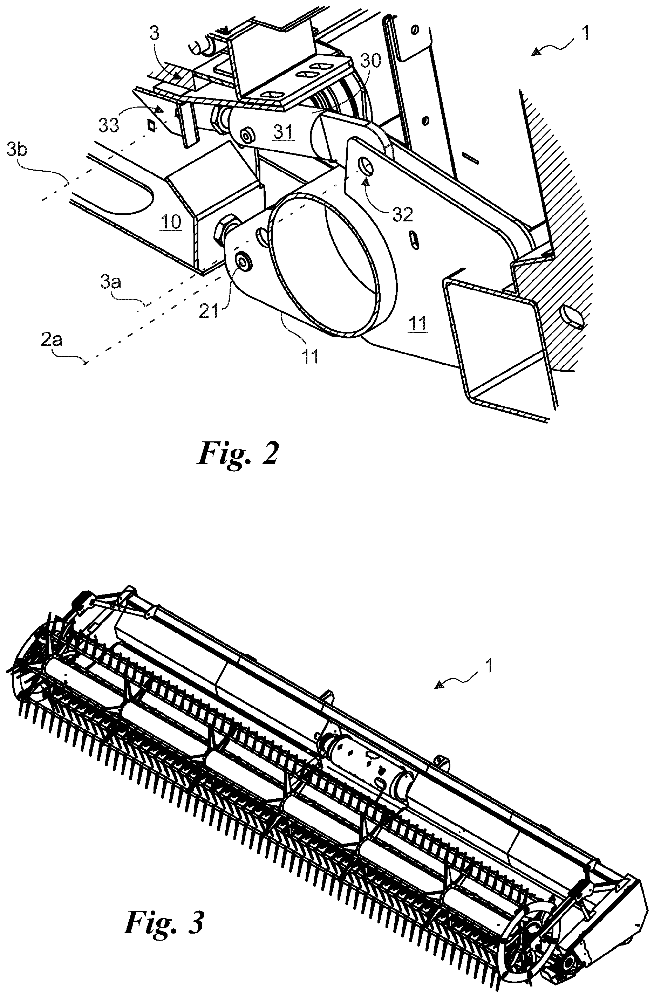

the **Fig. 2** illustrates the detail of a plan view of the improved harvester header section in Fig. 1;
the **Fig. 3** is a perspective view of an improved harvester head according to the complete invention; is

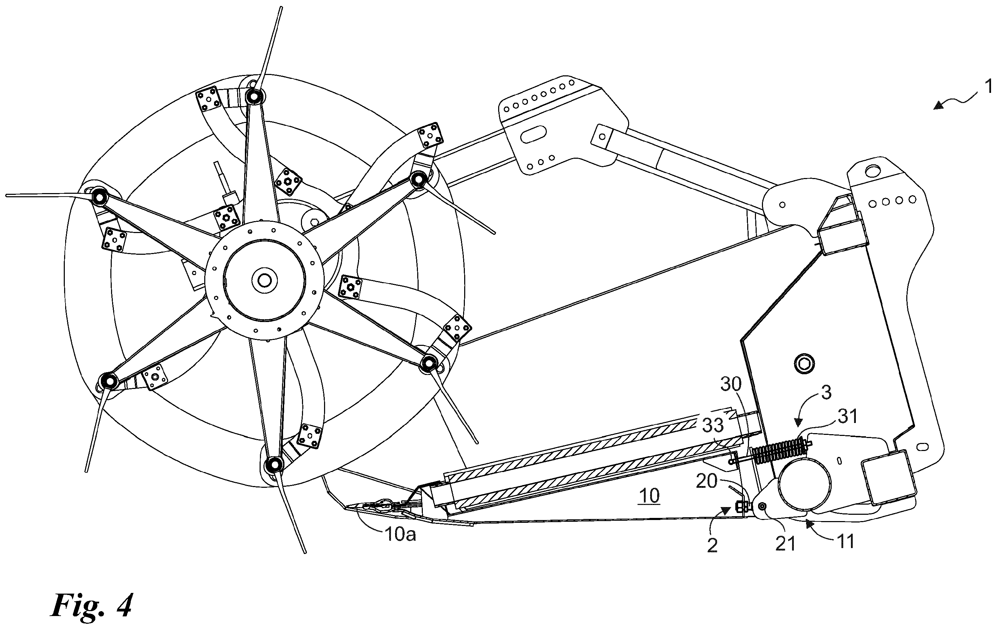

the **Fig. 4** is a side view of an improved harvester header according to the invention in a second embodiment.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

With reference to the figures, the improved harvester header according to the invention is globally indicated with the number **1.**

This combine harvester head 1 is, in particular, adapted to be installed on harvesting machines such as, for example, a harvester header or similar motorized vehicle, and comprises at least one arm **10,** to which at least one cutter bar is associated **10a,** and a frame **11.**

Naturally, preferably, the harvester header 1 includes a plurality of arms 10 connected to the frame 11 along the extension of the cutter bar 10a.

The arm 10 is substantially the header portion of the harvester header 1 which supports the cutter bar 10a and which is capable of proceeding integrally with the latter adjacent to the ground in such a way as to cut the crops it encounters in its path.

The arm 10, therefore, moves following the roughness of the ground in such a way as to perform the cut correctly. The movement of the arm 10 on the ground involves a movement defined as "floating" of the arm 10.

The frame 11 is, therefore, able to support the arm 10 on the ground which comprises the plurality of crops to be cut.

The combine header 1 comprises a first connector **2** and a second connector **3.** The first connector 2 is substantially a component configured to connect the cutter bar 10 to the frame 11. In this regard, preferably, the first connector 2 comprises at least a first component **20.**

The first component 20 is substantially an elongated element which joins the cutter bar 10 to the frame 11. The first component 20 is therefore constrained between the cutter bar 10 and the frame 11.

The first component 20, in particular, defines its own extension. The extension of the first component 20, therefore, defines the distance between the constraint areas of the cutter bar 10 and of the frame 11.

According to the invention, the first component 20 is adjustable in such a way as to allow the extension of the first component 20 to be controlled.

The first connector 2 also defines a first axis of rotation **2a.**

The first axis of rotation 2a is preferably parallel to the ground. The first axis of rotation 2a is, in addition, the axis about which the arm 10 can rotate with respect to the frame 11.

Naturally, the first axis of rotation 2a could be arranged in the constraint area between the arm 10 and the first component 20. Or, at any point along the extension of the first component 20. Or again in the constraint area between the frame 11 and the first component 20.

Preferably, the first axis of rotation 2a is arranged in the constraint area between the frame 11 and the first component 20.

In particular, preferably, the first component 20 is constrained to the frame 11 by means of a first hinge **21.**

The first hinge 21 is substantially any mechanical hinge which allows relative rotation between the first component 20 and the frame 11.

The first hinge 21, therefore, preferably defines the first axis of rotation 2a.

The second connector 3 is also capable of connecting the arm 10 to the frame 11. Therefore, the second connector 3 is constrained between the frame 11 and the arm 10. In fact, the second connector 3 is an element that works at traction and allows to keep the arm 10 supported with respect to the ground.

The second connector 3 comprises at least a second component 30.

The second component 30, in particular, also defines its own extension. The extension of the second component 30 therefore defines the distance between the constraint areas of the cutter bar 10 and of the frame 11

The second component 30 can therefore comprise an element capable of varying its extension such as, for example, a shock absorber or a piston or a telescopic actuator of the oleo-dynamic or other type.

Any other equivalent element can, however, be used.

Such second components 30 are, in fact, extremely well known to those skilled in the art and are widely used for connecting the arm 10 to the frame 11.

Advantageously, the second connector 3 is arranged above the first component 2, with respect to the ground. Therefore, the second connector 3 traction supports the arm 10 with respect to the frame 11.

The first connector 2, therefore, defines the mutual rotation constraint between the arm 10 and the frame 11, while the second connector 3 defines the support for the arm 10 with respect to to the frame 11.

Preferably still more in detail, the second connector 3 is configured to determine the positioning of the arm 10, and therefore of the cutter bar 10a, with respect to the ground.

The second component 30 includes control means **31.**

The control means 31 are substantially configured to exert a pulling or pulling force on the arm 10 with respect to the ground.

Therefore, thanks to the control means 31, it is possible to determine the position of the arm 10 and its possibility of movement with respect to the ground and / or the stiffness of the second connector 3.

Such control means 31 can comprise an adjustable oleo-dynamic piston, or an elastic element, such as a spring, which can be preloaded. Therefore, the control means 31 preferably allow to adjust the stiffness of the second connector 3. Furthermore, the second connector 3 is preferably loosely constrained to both the frame 11 and the arm 10 in such a way as to accommodate the rotation of the arm 10, with respect to the frame 11, around the first axis of rotation 2a.

In this regard, preferably, the second connector 3 defines a second axis of rotation **3a.**

The second axis of rotation 3a is preferably an axis of reciprocal rotation between the arm 10 and the second connector 3 or between the second connector 3 and the frame 11.

The second axis of rotation 3a is also parallel to the ground and, therefore, is also parallel to the first axis of rotation 2a.

Preferably, moreover, the second axis of rotation 3a and the first axis of rotation 2a are preferably separated and spaced apart from each other.

In particular, the second axis of rotation 3a is preferably arranged in the constraint area between the frame 11 and the second connector 3 in such a way as to be above the second axis of rotation 2a with respect to the ground.

The second component 30 is therefore preferably constrained to the frame 11 by means of a second hinge **32.**

The second hinge 32 can be substantially any mechanical hinge which allows relative rotation between the second component 30 and the frame 11.

The second hinge 32, therefore, preferably defines the second axis of rotation 3a. Furthermore, the second component 30 can be fastened to the arm 10 by means of a third hinge **33.**

The third hinge 33, if present, can be substantially any mechanical hinge that allows relative rotation between the second component 30 and the arm 10.

The third hinge 33, therefore, preferably defines a third axis of rotation **3b.**

The third axis of rotation 3b is preferably parallel to the ground and to the second axis of rotation 3a.

Naturally, the hinges 32, 33 may not be present or be replaced by equivalent elements, such as elastomeric hinges or bearingless structures. The presence of hinges 32, 33, or equivalent elements, is preferable especially if the second component 30 includes rigid elements, while it is completely superfluous especially if the second component 30 is deformable, for example if the second component 30 is entirely elastic.

Preferably, the components 20, 30 and the frame 11 form a triangular arrangement. In particular, preferably the distance between the first rotation axis 2a and the second rotation axis 3a and the distance between the first rotation axis 2a and the arm 10 are constant, while the distance between the arm 10 and the second rotation axis 3a is preferably variable and determined by the configuration of the control means 31.

From a structural point of view, in addition, preferably the first component 20 and the second component 30 are constrained to the arm 10 in correspondence with two distinct and separate areas of the arm 10. However, they could also join arm 10 also in the same area.

As already described, advantageously, the second component 30 is therefore arranged above the first component 20, or rather farther from the ground than the first component 20.

Therefore, the first axis of rotation 2a is substantially closer to the ground than the second axis of rotation 3a.

The operation of the improved harvester header 1 previously described in structural terms is as follows.

When the arm 10 moves following the roughness of the ground on which the combine header moves, the arm 10 rotates around the first axis of rotation 2a thanks to the first component 20.

During the rotation, the movements are controlled by the control means 31 which hold, or support, the arm 10 substantially pulling it towards the frame 11.

The improved combine harvester header 1 according to the invention achieves important advantages.

In fact, the improved harvester header allows the arm on which the cutter bar is constrained to float in a controlled and therefore effective manner.

This advantage is also achieved in the face of high simplicity, in terms of components used, and cost-effectiveness.

Therefore, the harvester header according to the invention allows the maintenance of the components to be carried out in a simple manner.

Another important advantage is given by the fact that in the improved harvester header 1 according to the invention, the second connector 3 and the control means 31 do not work by pushing, as in the devices of the prior art, but work by traction, substantially pulling the arm 10 towards the frame 11 and not moving it away from it. This implies that the loads and stresses to which the second connector 3 is subjected are reduced with respect to the loads involved in the configurations of the prior art.

The invention is susceptible of variants falling within the scope of the inventive concept defined by the claims.

## Claims

1. A combine harvester header (1) comprising
- an arm (10) associated with at least one cutter bar (10a) and a frame (11) adapted to support said arm (10) over a soil comprising a plurality of crops to be cut,
- a first connector (2) including a first component (20) constrained between said frame (11) and said arm (10) and defining at least a first axis of rotation (2a) parallel to said soil around which said arm (10) can rotate with respect to said frame (11),
- a second connector (3) including a second component (30) variable in extension, constrained between said frame (11) and said arm (10) and arranged above said first connector (2) with respect to said soil so as to support by traction said arm (10) with respect to said frame (11),
- said first component (20) defining its own extension and being adjustable so as to allow said extension to be controlled, and
**characterised in that**
said second connector (3) comprises control means (31) configured to exert a traction or pulling force on said arm (10) with respect to said soil.

2. The header (1) according to claim 1, wherein said second connector (3) defines a second axis of rotation (3a) parallel to said first axis of rotation (2a) around which said second component (30) can rotate with respect to said arm (10) or said frame (11).

3. The header (1) according to any one of the preceding claims, wherein said control means (31) comprise an element selected from an adjustable hydraulic piston or an elastic element so as to allow the stiffness of said second connector (3) to be adjusted.

4. The header (1) according to any one of the preceding claims, wherein said second component (30) is constrained to said frame (11) by means of a second hinge (32) defining said second axis of rotation (3a).

5. The header (1) according to any one of the preceding claims, wherein said first component (20) is constrained to said frame (11) by means of a first hinge (21) defining said first axis of rotation (2a).

6. The header (1) according to any one of the preceding claims, wherein said first component (20) and said second component (30) are constrained to said arm (10) in two distinct and separate areas of said arm (10).

7. The header (1) according to any one of the preceding claims, wherein the distance between said first axis of rotation (2a) and said second axis of rotation (3a) and the distance between said first axis of rotation (2a) and said arm (10) are constant.

8. A combine harvester including a header (1) according to any one of the preceding claims.

## Patentansprüche

1. Mähdrescherkopf (1), umfassend
- einen Arm (10), der mindestens einer Schneidstange (10a) und einem Rahmen (11) zugeordnet ist, wobei der Rahmen (11) eingerichtet ist, den Arm (10) über einem Boden zu stützen, der eine Vielzahl von zu schneidenden Feldfrüchten aufweist,
- einen ersten Verbinder (2) umfassend ein erstes Bauelement (20), das zwischen dem Rahmen (11) und dem Arm (10) befestigt wird und mindestens eine erste Drehachse (2a) definiert, die sich parallel zu dem Boden erstreckt, um die sich der Arm (10) in Bezug auf den Rahmen (11) drehen kann,
- einen zweiten Verbinder (3) umfassend ein zweites Bauelement (30) mit veränderlichen Länge, das zwischen dem Rahmen (11) und dem Arm (10) befestigt wird und das oberhalb des ersten Verbinders (2) in Bezug auf den Boden angeordnet ist, um den Arm (10) in Bezug auf den Rahmen (11) durch Zug zu stützen,
- wobei das erste Bauelement (20) seine eigene Ausdehnung definiert und einstellbar ist, um der Ausdehnung zu ermöglichen, gesteuert zu werden, und
**dadurch gekennzeichnet, dass**
der zweite Verbinder (3) Steuermittel (31) umfasst, die dazu konfiguriert sind, eine Traktion-oder Zugkraft auf den Arm (10) in Bezug auf den Boden auszuüben.

2. Kopf (1) nach Anspruch 1, wobei der zweite Verbinder (3) eine zweite Drehachse (3a) definiert, die sich parallel zu der ersten Drehachse (2a) erstreckt, um die sich das zweite Bauelement (30) in Bezug auf den Arm (10) oder in Bezug auf den Rahmen (11) drehen kann.

3. Kopf (1) nach einem der vorhergehenden Ansprüche, wobei die Steuermittel (31) ein Element umfassen, das aus einem verstellbaren Hydraulikkolben oder einem elastischen Element ausgewählt wird, um die Steifigkeit des zweiten Verbinders (3) eingestellt zu werden.

4. Kopf (1) nach einem der vorhergehenden Ansprüche, wobei das zweite Bauelement (30) an dem Rahmen (11) durch ein zweites Gelenk (32) befestigt wird, wobei dieses Gelenk die zweite Drehachse (3a) definiert.

5. Kopf (1) nach einem der vorhergehenden Ansprüche, wobei das erste Bauelement (20) an dem Rahmen (11) durch ein erstes Gelenk (21) befestigt wird, wobei dieses Gelenk die erste Drehachse (2a) definiert.

6. Kopf (1) nach einem der vorhergehenden Ansprüche, wobei das erste Bauelement (20) und das zweite Bauelement (30) an zwei unterschiedlichen und getrennten Bereichen des Arms (10) befestigt sind.

7. Kopf (1) nach einem der vorhergehenden Ansprüche, wobei der Abstand zwischen der ersten Drehachse (2a) und der zweiten Drehachse (3a) und der Abstand zwischen der ersten Drehachse (2a) und dem Arm (10) anhaltend sind

8. Mähdrescher umfassend einen Kopf (1) nach einem der vorhergehenden Ansprüche.

## Revendications

1. une tete de moissonneuse-batteuse (1) comprenant
- un bras (10) associé à au moins une barre de coupe (10a) et un bâti (11) apte à supporter ledit bras (10) au-dessus d'un sol comprenant une pluralité de cultures à couper,
- un premier connecteur (2) comprenant un premier composant (20) contraint entre ledit bâti (11) et ledit bras (10) et définissant au moins un premier axe de rotation (2a) parallèle audit sol autour duquel ledit bras (10) peut tourner par rapport audit bâti (11),
- un second connecteur (3) comprenant un second composant (30) à extension variable, contraint entre ledit bâti (11) et ledit bras (10) et disposé au-dessus dudit premier connecteur (2) par rapport audit sol de manière à soutenir par traction ledit bras (10) par rapport audit bâti (11),
- ledit premier composant (20) définissant sa propre extension et étant ajustable de manière à permettre de commander ladite extension, et
**caractérisé en ce que**
ledit second connecteur (3) comprend des moyens de commande (31) configurés pour exercer une force de traction ou de tirage sur ledit bras (10) par rapport audit sol.

2. la tete (1) selon la revendication 1, dans laquelle e ledit second connecteur (3) définit un second axe de rotation (3a) parallèle audit premier axe de rotation (2a) autour duquel ledit second composant (30) peut tourner par rapport audit bras (10) ou audit bâti (11).

3. La tete (1) selon l'une quelconque des revendications précédentes, dans laquelle lesdits moyens de commande (31) comprennent un élément choisi parmi un piston hydraulique réglable ou un élément élastique de manière à permettre d'ajuster la raideur dudit second connecteur (3).

4. La tete (1) selon l'une quelconque des revendications précédentes, dans laquelle ledit second composant (30) est contraint audit bâti (11) au moyen d'une seconde charnière (32) définissant ledit second axe de rotation (3a).

5. La tete (1) selon l'une quelconque des revendications précédentes, dans laquelle ledit premier composant (20) est contraint audit bâti (11) au moyen d'une première charnière (21) définissant ledit premier axe de rotation (2a).

6. La tete (1) selon l'une quelconque des revendications précédentes, dans laquelle ledit premier composant (20) et ledit second composant (30) sont contraints audit bras (10) dans deux zones distinctes et séparées dudit bras (10).

7. La tete (1) selon l'une quelconque des revendications précédentes, dans laquelle la distance entre ledit premier axe de rotation (2a) et ledit second axe de rotation (3a) et la distance entre ledit premier axe de rotation (2a) et ledit bras (10) sont constantes.

8. Une moissonneuse-batteuse comprenant une tete (1) selon l'une quelconque des revendications précédentes.
